# EUROPÄISCHE PATENTSCHRIFT

(11) **EP 1 807 269 B1**
(45) Veröffentlichungstag und Bekanntmachung des Hinweises auf die Patenterteilung: **10.03.2010**
(21) Anmeldenummer: 05750294.0
(22) Anmeldetag: 04.06.2005
(51) Int. Cl.: B60C 23/04

(54) **RADSENSOR FÜR REIFENDRUCKKONTROLLEINRICHTUNG MIT HALTERUNG**
WHEEL SENSOR FOR A TYRE-PRESSURE CONTROL DEVICE WITH HOLDER
CAPTEUR DE ROUE POUR UN DISPOSITIF DE CONTROLE DE LA PRESSION DES PNEUS COMPORTANT UN ELEMENT DE MAINTIEN

(30) Priorität: 05.08.2004 DE 102004037956
(43) Veröffentlichungstag der Anmeldung: 18.07.2007
(73) Patentinhaber: Dr. Ing. h.c. F. Porsche Aktiengesellschaft, 70435 Stuttgart (DE)
(72) Erfinder: BAUM, Michael, 75233 Tiefenbronn-Lehningen (DE)
(86) Internationale Anmeldenummer: PCT/EP2005/006022
(87) Internationale Veröffentlichungsnummer: WO 2006/015638

(56) Entgegenhaltungen:
- EP-A- 1 386 759
- US-B1- 6 357 833

## Beschreibung

Die Erfindung betrifft einen Radsensor für eine Reifendruckkontrolleinrichtung mit Halterung.

Aus der EP 1386759 A1 ist beispielsweise bekannt, einen Radsensor für eine Reifendruckkontrolleinrichtung so auszubilden, dass er fest mit einem Ventilkörpergehäuse eines Rades verbunden ist. Dieser Reifendrucksensor wird gemeinsam mit dem Ventil am Rad befestigt, so dass keine gesonderte Halterung erforderlich ist. Nachteilig hierbei ist, dass kein Standard-Ventilgehäuse aus Gummi verwendet werden kann, sondern dass aus Festigkeitsgründen ein gesondertes, vollständig aus Metall gefertigtes Ventilgehäuse verwendet werden muss. Ferner ist es teilweise nicht möglich, das Ventilgehäuse bei Beschädigungen alleine auszutauschen, da es mit der Radelektronik untrennbar verbunden ist. Die Radelektronik ist schließlich nicht frei platzierbar, sondern ist systembedingt immer in der Nähe des Ventils angeordnet.

Weiterhin ist aus der US6, 357, 833 B1 ein Radsensor bekannt, welcher mittels seitlich abstehender Einrasthaken in einer Felgenaussparung gehalten wird.

Ausgehend von diesem Stand der Technik ist es Aufgabe der Erfindung, einen Radsensor für eine Reifendruckkontrolleinrichtung zu schaffen, der einerseits günstig in seiner Herstellung und Montage ist und andererseits keine besonderen Ventileinrichtungen am Rad erfordert.

Diese Aufgabe wird mit den Merkmale des Anspruches 1 gelöst. Erfindungsgemäß wird vorgeschlagen, an einem Gehäuse des Radsensors ein schwenkbar gelagertes Gehäuseteil vorzusehen, wobei das Gehäuseteil über ein festsetzbares Spannelement verschwenkbar ist. Endseits des schwenkbar gelagerten Gehäuseteiles wie auch gegenüberliegend am Gehäuse ist jeweils eine Rippe vorgesehen. Zur Aufnahme der beiden Rippen sind an einer Felge als Bestandteil des Rades in einer Haltevorrichtung korrespondierende Nuten vorgesehen. Rippen und Nuten können selbstverständlich auch umgekehrt angeordnet sein. Zur Montage des Radsensors wird das Spannelement gelöst und der Radsensor in die an der Felge befestigte Haltevorrichtung eingelegt. Durch Betätigen des Spannelementes, vorzugsweise einer Schraube, wird das schwenkbar gelagerte Gehäuseteil verschwenkt, bis sich beide Rippen im Eingriff mit den Nuten befinden. Der Radsensor ist nun montiert und das Spannelement kann festgesetzt werden. Da der erfindungsgemäße Radsensor unabhängig vom Radventil am Rad befestigt ist, können konventionelle Radventile verwendet werden und der Radsensor kann frei an der Felge platziert werden. Die radseitige Haltevorrichtung kann sehr einfach und kostengünstig ausgeführt werden. Die hiermit erzielte Befestigung des Radsensors ist einerseits dauerhaft, andererseits kann der Radsensor im Reparaturfall auch einfach gewechselt werden.

Vorteilhafte Weiterbildungen der Erfindung sind in den Unteransprüchen beschrieben.

So wird vorgeschlagen, die Haltevorrichtung in der Felge selber auszubilden. Hierzu sind in der Felge Erhebungen vorzusehen, in die, beispielsweise durch Fräsen, die Nuten zur Aufnahme der Rippen des Radsensors eingearbeitet werden können. Diese Erhebungen könnten beim Guss der Felge hergestellt oder auch nachträglich aufgeschweißt werden. Ist beispielsweise an einer Felgenwandung genügend Material vorhanden, so kann hier auch unmittelbar eine Haltevorrichtung in Form einer Vertiefung eingearbeitet werden.

Alternativ kann die Haltevorrichtung separat hergestellt und an der Felge befestigt werden. Eine solche Haltevorrichtung kann beispielsweise im Kunststoffspritzgussverfahren sehr kostengünstig hergestellt werden. Durch Verkleben mit der Felge wird sie dauerhaft befestigt. Zur Aufnahme und gleichmäßigen Verteilung von überschüssigen Klebstoff sind an der Unterseite der Haltevorrichtung Nuten oder andere Vertiefungen eingearbeitet.

Die Erfindung ist nachstehend anhand der in den Figuren dargestellten Ausführungsbeispiele näher erläutert.

Es zeigen:
- Fig. 1: den Radsensor in einer aufgeklebten Aufnahme,
- Fig. 2: den Radsensor zwischen Erhebungen einer Felge,
- Fig. 3: die Aufnahme nach Fig. 1 ohne den Radsensor,
- Fig. 4: den Radsensors außerhalb der Aufnahme nach Fig. 1, und
- Fig. 5: eine Unterseite der Aufnahme nach Fig. 1.

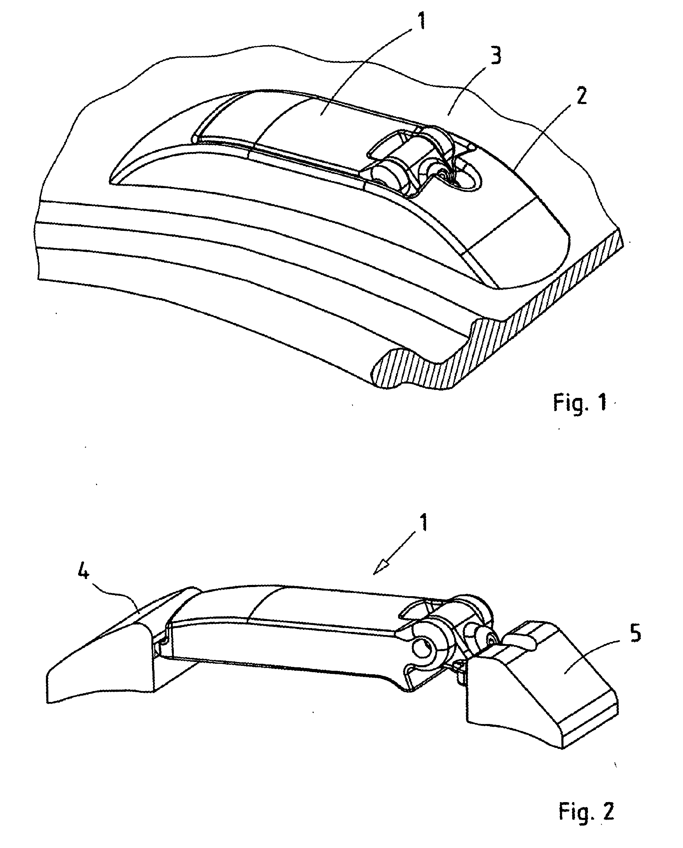

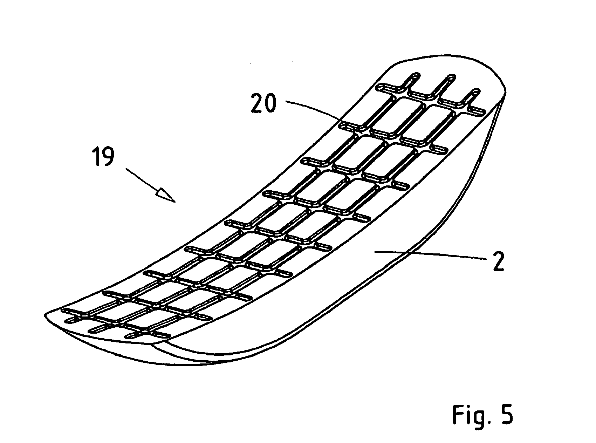

Der in Fig. 1 dargestellte Radsensor 1 ist im eingebauten Zustand in ein als Haltevorrichtung wirkendes Gehäuse 2 dargestellt, wobei das Gehäuse 2 auf die Innenseite einer Felge 3 aufgeklebt ist. Die Felge 3 ist Bestandteil eines nicht näher gezeigten Rades. Beim Aufkleben des Gehäuses 2 auf die Felge 3 wird auf die in Fig. 5 gezeigte Unterseite 19 des Gehäuses 2 Klebstoff aufgetragen. In die Unterseite 19 ist ein Netz aus Nuten 20 eingearbeitet, die den Klebstoff gleichmäßig verteilen und gegebenenfalls überschüssigen Klebstoff aufnehmen können. Fig. 2 zeigt denselben Radsensor 1 im eingebauten Zustand, wobei hier an der Felge 3 als alternative Haltevorrichtung zwei Erhebungen 4, 5 angeformt sind, zwischen denen der Radsensor 1 gehalten ist.

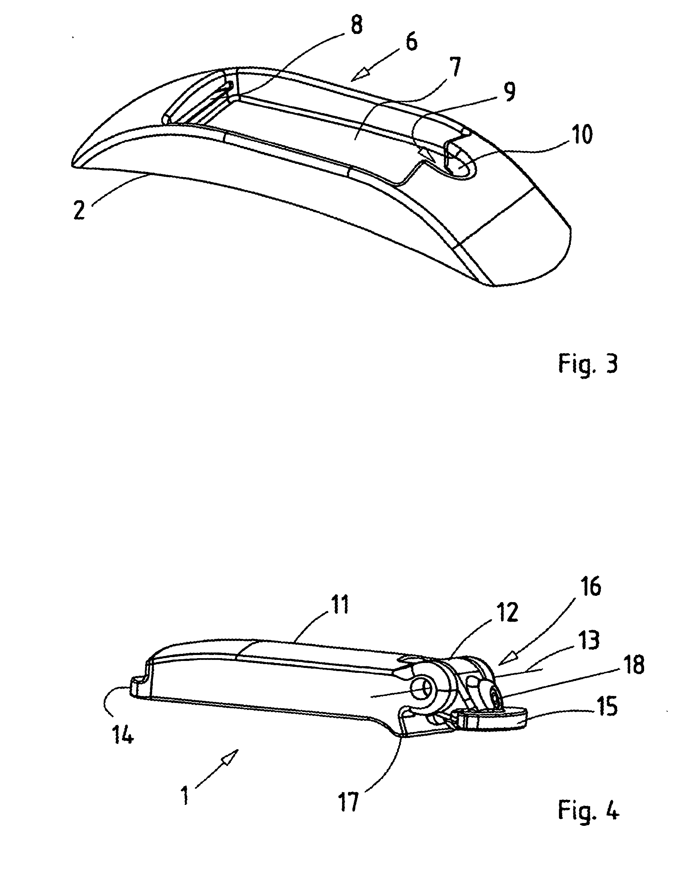

Fig. 3 zeigt das Gehäuse 2 im nicht eingebauten Zustand. Die Gestaltung einer Aufnahme 6 für den Radsensor 1 ist bei beiden Alternativen der Haltevorrichtung - dem Gehäuse 1 (Fig. 1) und den Erhebungen 4, 5 (Fig. 2) - gleich. Die Aufnahme 6 besteht aus einer Vertiefung 7, die so groß ist, dass sie den Radsensor 1 vollständig aufnehmen kann. Zwei stirnseitige Wände der Vertiefung 7 sind mit Nuten 8, 9 versehen. Zusätzlich ist an einer der Seitenwände eine Ausnehmung 10 vorgesehen, um ein Werkzeug einführen zu können.

Der in Fig. 4 außerhalb der Aufnahme 6 gezeigte Radsensor 1 besteht aus einem ersten Gehäuseteil 11 und einem zweiten Gehäuseteil 12, wobei das zweite Gehäuseteil 12 über eine Schwenkachse 13 am ersten Gehäuseteil 11 schwenkbar gelagert ist. Gegenüberliegend der Schwenkachse 13 ist am ersten Gehäuseteil 11 endseits eine Rippe 14 vorgesehen. Das zweite Gehäuseteil 12 weist gegenüberliegend der Schwenkachse 13 endseits eine weitere Rippe 15 auf. Ferner ist im zweiten Gehäuseteil 12 eine Gewindebohrung 16 zur Aufnahme einer Madenschraube 18 vorgesehen.

An der Unterseite des ersten Gehäusesteils 11 ist unterhalb der Lagerachse 13 eine quer verlaufende Rippe 17 angeordnet. Diese Rippe 17 dient einerseits als Anlagefläche für die Madenschraube 18 und andererseits zum Abstützen des ersten Gehäuseteiles 11 am Boden der Vertiefung 7.

Über die Madenschraube 18 können die beiden Gehäuseteile 11, 12 des Radsensors 1 gegeneinander verschwenkt werden. Wird die Madenschraube 18 aus der Gewindebohrung 16 herausgedreht, so lässt sich das zweite Gehäuseteil 12 nach unten schwenken. In dieser Stellung kann der Radsensor 1 in die Ausnehmung 7 eingeführt werden und die Rippe 14 wird im Eingriff mit der Nut 8 gebracht. Durch Eindrehen der Madenschraube 18 in die Gewindebohrung 16 wird nun der zweite Gehäuseteil 12 soweit verschwenkt, bis die Rippe 15 im Eingriff mit der Nut 9 ist. Durch weiteres Eindrehen der Madenschraube 18 und dadurch weiteres Verschwenken des zweiten Gehäuseteiles 12 wird der Radsensor 1 in der Vertiefung immer weiter nach unten gedrückt, bis die Rippe 17 am Boden der Ausnehmung 7 anliegt.

In diesem Zustand ist der Radsensor 1 im Gehäuse 2 sicher gehalten. Da er innerhalb der Ausnehmung 7 verspannt ist, kann er sich nicht bewegen. Im Reparaturfall hingegen ist ein Austauschen des Radsensors 1 durch Lösen der Madenschraube 18 einfach möglich. Die Madenschraube 18 ist so ausgeführt, dass sie festsetzbar und damit gegen selbsttätiges Lösen gesichert ist. Hierzu kann die Madenschraube beispielsweise selbsthemmend ausgeführt sein.

Die Befestigung in der alternativen Haltevorrichtung zwischen den beiden Erhebungen 4, 5 erfolgt in gleicher Weise. Die Erhebungen 4, 5 können dabei an der Felge 3 sowohl angegossen wie auch angeschweißt sein. Sie sind innenseits ebenfalls mit Nuten 8, 9 versehen.

## Patentansprüche

1. Radsensor für eine Reifendruckkontrolleinrichtung bestehend aus zwei schwenkbar miteinander verbundenen Gehäuseteilen (11, 12), die jeweils endseits mit einer Rippe (14, 15) versehen sind, wobei zwischen den Gehäuseteilen ein festsetzbares Spannelement (18) wirkt, mit einer Haltevorrichtung (4,5, 6) mit zu den Rippen korrespondierende Nuten (8, 9).

2. Radsensor nach Anspruch 1, **dadurch gekennzeichnet, dass** die Haltevorrichtung aus Erhebungen (4, 5) besteht, die in einer Felge (3) eingeformt sind.

3. Radsensor nach Anspruch 1, **dadurch gekennzeichnet, dass** die Haltevorrichtung aus einer separaten Aufnahme (6) besteht, wobei die Aufnahme (6) ein Kunststoffspritzgussteil ist und durch Verkleben an der Felge (3) befestigt ist.

4. Radsensor nach einem der vorstehenden Ansprüche, **dadurch gekennzeichnet, dass** das Spannelement (18) eine Schraube ist.

5. Radsensor nach einem der vorstehenden Ansprüche, **dadurch gekennzeichnet, dass** an der Unterseite des ersten Gehäusesteils (11) unterhalb der Lagerachse (13) eine quer verlaufende Rippe (17) angeordnet ist.

## Claims

1. Wheel sensor for a tyre-pressure monitoring device composed of two housing parts (11, 12) which are pivotably connected to one another and are each provided with a rib (14, 15) at the end, wherein a clamping element (18) which can be locked acts between the housing parts, with a holding device (4, 5, 6) with grooves (8, 9) corresponding to the ribs.

2. Wheel sensor according to Claim 1, **characterized in that** the holding device is composed of protrusions (4, 5) which are integrally formed into a rim (3).

3. Wheel sensor according to Claim 1, **characterized in that** the holding device is composed of a separate receptacle (6), wherein the receptacle (6) is an injection moulded plastic part and is attached to the rim (3) by bonding.

4. Wheel sensor according to one of the preceding claims, **characterized in that** the clamping element (18) is a screw.

5. Wheel sensor according to one of the preceding claims, **characterized in that** a transversely extending rib (17) is arranged on the underside of the first housing part (11), underneath the bearing axis (13).

## Revendications

1. Détecteur de roue pour dispositif de contrôle de la pression d'un bandage de roue, constitué de deux parties de boîtier (11, 12) reliées à pivotement l'une à l'autre et dotées toutes deux à leur extrémité d'une nervure (14, 15), un élément de serrage (18) immobilisable qui présente un dispositif de maintien (4, 5, 6) doté de rainures (8, 9) correspondant aux nervures agissant entre les pièces de boîtier.

2. Détecteur de roue selon la revendication 1, **caractérisé en ce que** le dispositif de maintien est constitué de reliefs (4, 5) formés dans une jante (3).

3. Détecteur de roue selon la revendication 1, **caractérisé en ce que** le dispositif de maintien est constitué d'un logement (6) séparé, le logement (6) étant une pièce en matière synthétique coulée par injection fixée par collage sur la jante (3).

4. Détecteur de roue selon l'une des revendications précédentes, **caractérisé en ce que** l'élément de serrage (18) est une vis.

5. Détecteur de roue selon l'une des revendications précédentes, **caractérisé en ce qu'**une nervure (17) qui s'étend transversalement est disposée en dessous de l'axe de montage (13) sur le côté inférieur de la première partie de boîtier (11).
